# EUROPEAN PATENT SPECIFICATION

(11) **EP 3 435 589 B1**
(45) Date of publication and mention of the grant of the patent: **01.04.2020**
(21) Application number: 17382493.9
(22) Date of filing: 25.07.2017
(51) Int. Cl.: H04L 9/32, H04L 9/08

(54) **A METHOD AND A SYSTEM FOR ENCRYPTING WIRELESS COMMUNICATIONS INCLUDING AUTHENTICATION**
VERFAHREN UND SYSTEM ZUR VERSCHLÜSSELUNG DRAHTLOSER KOMMUNIKATION MIT AUTHENTIFIZIERUNG
PROCÉDÉ ET SYSTÈME DE CRYPTAGE DE COMMUNICATIONS SANS FIL COMPRENANT L'AUTHENTIFICATION

(43) Date of publication of application: 30.01.2019
(73) Proprietor: Telefonica Digital España, S.L.U., 28013 Madrid (ES)
(72) Inventor: González Pérez, Pablo, 28013 Madrid (ES); Torrano Giménez, Carmen, 28013 Madrid (ES); Alonso Cebrián, José María, 28013 Madrid (ES)
(74) Representative: Carlos Hernando, Borja

(56) References cited:
- US-A1- 2017 185 761
- UYMATIAO MARIANO LUIS T ET AL: "Time-based OTP authentication via secure tunnel (TOAST): A mobile TOTP scheme using TLS seed exchange and encrypted offline keystore", 2014 4TH IEEE INTERNATIONAL CONFERENCE ON INFORMATION SCIENCE AND TECHNOLOGY, IEEE, 26 April 2014 (2014-04-26), pages 225-229, XP032657254, DOI: 10.1109/ICIST.2014.6920371 [retrieved on 2014-10-10]

## Description

### Field of the invention

The present invention generally relates to wireless connections. In particular, present invention relates to a method, and to a system, for encrypting wireless communications including authentication, particularly usable for small office/home office (SOHO) environments.

It has to be noted that, authentication is the process of determining whether someone is, in fact, who it is declared to be.

Biometry is the science of establishing the identity of the person based on physical or behavioral attributes such as fingerprint, face, veins, ear and iris disposition or specifics, etc. Biometric systems are based on the premise that the physical and behavioral attributes can be uniquely associated with an individual.

Cryptobiometry relates to the generation of encryption keys with biometry. These systems use biometrics to build keys thus authentication is implicitly included. This paradigm reduces the inconvenient of remembering or carrying long and complex keys.

Time-based One Time Password (TOTP) is an algorithm that dynamically generates unique keys that are used only once introducing current time for its calculation. The TOTP is calculated by using hash function that combines a fixed and a dynamic component, that is, the TOTP secret (or previously shared key) and current time. It is defined in RFC 6238. Although the TOTP concept is used, present invention solution includes some variations to the typical definition and/or implementation of TOTP.

### Background of the invention

Schemes and protocols for wireless communications usually provide an association phase between the communicating parts and a transmission phase. In the first stage the user is authenticated.

Traditional authentication systems using passwords for testing whether the user is the correct one suffer from several disadvantages, such as impersonation in case of the password is stolen or guessed. The protocols normally used for securing wireless networks, like WEP, WPA or WPA2 typically use preshared key for the key ciphering the wireless communication, what may lead to the problems previously mentioned.

To avoid such problems and use authentication inputs that are more personal and able to profile the user uniquely, there are some other systems that use biometric characteristics of the user to authenticate her/him. Cryptobiometry relates to the generation of encryption keys with biometry.

Apart from that, TOTP (Time-based One Time Password) is a mechanism that can be used to strength the security of systems since it includes the current time and changes periodically.

Moreover, most existing computer and network systems authenticate a user only at the initial login session. Situations such as device sharing, device robbery or impersonation attacks could lead to undesirable security situations. Continuous authentication (keeping usability under acceptable terms) is needed to address this problem and continuously monitoring and authenticating the logged in user to make sure she/he is still the person that is expected.

There are known some patent or patent applications in this field.

US-A1-20130004033 concerns with an authentication system for authenticating at least one object. The authentication system comprises: a capture device for capturing at least one biometric output data record for the object; a reading device for reading configuration data, associated with the object, for an artificial neural network; a processing device which is designed to produce the artificial neural network and to input the biometric output data record into the neural network; a verification device which captures an output from the neural network in order to authenticate the object, wherein the neural network is a bidirectional associative memory, particularly a Hopfield network, having a multiplicity of network states and the verification device is designed to determine the output from the neural network by capturing a final state derived from the input of the biometric output data record. A fundamental concept of this invention is the use of a neural network to store a key associated with a particular person, wherein said key is released only when appropriate biometric data are input into the neural network. Unlike present invention, this invention does not provide periodic authentication.

US-A1-20080113786 provides a gaming device to identify a user, encrypts it and compares it with the one stored previously on an authentication device. It is only focused on authenticating the user. Besides authentication, present invention also includes a method for ciphering/encrypting the wireless communication and includes periodic authentication.

US-A1-20110239276 is focused on solving authorization in wireless access by creating a characteristic vector with context information and/or the user status and a user profile. The problem solved by this patent application is more related to authorization of access to secured network resources. On the contrary, present invention solution is more focused on the authentication problem as well as on ciphering the information exchanged in the wireless communication.

WO-A1-2014141263 discloses a system for authentication and authorization. The scenario involves one or more clients and an authentication server. The process is: the client generates an OTP, encrypts it and generates authentication credentials. The server decrypts the OTP from the client and checks whether it matches with the OTP generated by the server. In case the biometric inputs of the clients match the biometric templates, the OTP are generated. Present invention solution, besides authentication, encrypts the communication with a key that contains biometric characteristics from the user, a random and a temporal factor. Differently to other systems, the biometric characteristics are included in the TOTP secret. Since the encryption key contains the biometric features in the TOTP secret, only the authorized user can enable the wireless communication. Additionally, present invention solution asks for refreshing biometric credentials periodically to verify that the user is still the one that authenticated.

WO-A1-2016019127 discloses a system for authentication with asymmetric cryptography. For that, there are three elements in the solution: a user device, a connected device and a server. The server sends a challenge ciphered with a public key to the connected device. The connected device provides it to the user device. The user device deciphers the challenge with a private key and generates a converted challenge. The converted challenge is sent to the connected device that provides it to the server so that it can validate it and authenticate the user. The system could also use biometric sensors for authentication. This system is only focused on authenticating the user. Besides that, present invention also includes a method for ciphering/encrypting the wireless communication and includes periodic authentication. US-B2-8266681 discloses a method for providing access to one or more resources in a computer network via a wireless access point. The authorization level of the user is changed depending on the authentication data received from the user. A first authentication level is assigned to the client device based on the authentication. Then, a program is sent to the client device, which is configured according to the logon script. After executing the programs, second authentication level information is sent in relation to the user of the device. If the second authentication data is valid, the second authentication level is greater than the first one and comprises access to additional network resources. If the second authentication data is not valid, the second level is more restricted and gives access to a subnet of the first one. Authentication data from the client device comprises biometric data. Therefore, this solution focuses on authentication and authorization of a user for accessing resources through a wireless network. This system does not use OTP. Differently from this solution, present invention uses biometry for the TOTP secret. Besides authenticating the user, present invention solution provides periodic authentication. It also includes a method for ciphering the communication with the access point and generating an encryption key that only allows the valid user to communicate in the wireless network.

Further solutions are also disclosed in WO-A1-2015153559, US-A1-20160315771, US-A1-20020144128, US-A1-20120204245, US-A1-20120240204, US-A1-20170053252 and US-A-5229764.

More solutions are therefore needed to assure that a wireless communication is only established by the person/user that was authenticated and that at the same time encrypts the communication, including biometric information of the user, and provides periodic authentication to make sure that said user is still authorized.

### Description of the Invention

Embodiments of the present invention provide according to an aspect a method for encrypting wireless communications including authentication, the method comprising, initially, setting the configuration parameters for the wireless connection to a communication network such as the Internet. This is done by a networking device such as a router receiving biometric credential information from a user (i.e. the user himself/herself introduces its biometric information such as a fingerprint, a face recognition, voice recognition, among others, on the networking device), processing the biometric credential information of the user to extract biometric features thereof, and by generating a further sending to a computing device of the user a random string. The networking device stores the extracted biometric features and the generated random string in a register thereof.

Then, the networking device receives a request for said wireless connection from the computing device, and subsequently the computing device receives the biometric credential information from the user extracting biometric features thereof. Following, both the computing device and the networking device generate a temporary passcode such as a TOTP by performing a first cryptographic function over the received/stored random string and the biometric features providing a secret parameter and by performing a second cryptographic function over the provided secret parameter and a time parameter (i.e. a time parameter containing the number of time steps from an initial counter and current time of the computing device/networking device). The networking device stores the generated temporary passcode in the register. It should be noted that for the correct functioning of the TOTP, the network and computing device clocks need to be roughly synchronized.

Following, the computing device sends to the networking device a device address thereof, preferably its MAC address, and an encrypted data packet containing a given text, for example the text 'Hello'. The data packet is encrypted with an encryption key corresponding to the temporary passcode generated by the computing device. When the networking device receives the encrypted text, it checks whether the received device address of the computing device is already stored in said register. Two situations can arise here, if said device address is not stored in the register (i.e. it is a first connection of the computing device), the networking device checks every encryption key not associated to a device address until finding the one that decrypts and gets the given text, and updates said register associating the device address to the computing device, on the contrary, if said device address is stored in the register, the networking device uses the encryption key associated to the device address to decrypt the received data packet. Finally, the wireless connection is established between the computing device and the networking device, said wireless connection being encrypted with the encryption key.

It should be noted that the wireless connection is only established if all the factors (biometric features, random string and temporal factor) match with those in the networking device. That is, if in said first connection of the computing device none of the encryption keys not associated to a device address allows decrypting the data packet and getting the given text, the wireless connection is not established. Besides, in the following connections of the computing device, if the key associated to the device address does not allow getting the given text, the wireless connection is not established either.

According to the proposed method, the user is authenticated every certain configurable period of time by the computing device requesting the user to reintroduce the biometric credential information. In case the reintroduced biometric credential information does not match the one stored in the register the networking device stops the wireless connection. Moreover, the temporary passcodes are periodically generated in a parallel and asynchronous process to the wireless connection by using the random string, the time parameter and the last biometric credential information introduced by the user on the computing device. In the case of the networking device the biometric credential information was introduced by the user on said setting step. Since the temporary passcode, used to cipher/encrypt the communication, changes periodically, it provides security in case the passcode is compromised. Each passcode is valid only for a certain period of time. Every time the temporary passcode changes, a data packet with the given text is sent to the networking device, besides packets corresponding to data of the communication, so that the networking device can check if the text obtained in decryption matches this text, and then the three factors in the temporary passcode (biometry, random string, temporal factor) are checked to be correct. If any of these factors are not correct, the networking device stops the wireless connection.

Preferably, the proposed method is focused on wireless connections happening in small office/home office (SOHO) environments. However, the method could also be applied in an enterprise environment, where the user would need to access the company router.

According to a preferred embodiment, the first cryptographic function comprises a hash function and the second cryptographic function comprises a keyed-hash message authentication code (HMAC). In this case, a crypto parameter of the second cryptographic function might be settled to Secure Hash Algorithm of 512 bits in which only half of said bits are taken and Advanced Encryption Standard (AES) is used as encryption algorithm for the encryption key. Another possibility would be using the Secure Hash Algorithm of 256 bits.

According to an embodiment, the random string is send to the computing device via a quick response (QR) code.

Embodiments of the present invention also provide according to another aspect a system for encrypting wireless communications including authentication comprising a computing device and a networking device to perform the method embodiment steps and operations summarized above and disclosed in detail below. According to the proposed system the computing device such as a mobile smartphone includes one or more processors and at least one biometric unit configured to receive biometric credential information from a user, and the networking device, which is configured to provide wireless connection to a communications network to said computing device, includes one or more processors, a memory and at least one biometric unit configured to receive biometric credential information from the user.

Present invention provides a cryptobiometric system that uniquely identifies the user by using biometric characteristics of the user. Moreover, the proposed solution uses a random factor, a temporal factor and biometric features to protect the wireless communication. Only when all these three elements are correct the wireless communications can be stablished. This implies that the communication can only be established by the person and the device that was authenticated. Moreover, it provides authentication (implicit) for a wireless network.

The fact that the encryption key of the communication changes periodically provides security to the communication in case the key would be stolen or compromised for any reason.

It provides periodic authentication to make sure that the user is still the authorized person. Since biometric credentials are requested periodically, it is possible to make sure that the user of the device is the one that was authenticated.

The invention prevents any other user than the authorized one to use the wireless connection (in the worst case, the person that impersonates could use the connection only until the next time the biometric credentials are requested again). This is also useful in case of robbery of the user's computing device.

Another advantage of present invention solution is that visitors in the domestic scenario can connect to the wireless network easily, by introducing their biometric credentials in the networking device. It is not necessary to give them long passwords. Besides, it is user friendly since this process is transparent to the user.

### Brief Description of the Drawings

The previous and other advantages and features will be more fully understood from the following detailed description of embodiments, with reference to the attached drawings, which must be considered in an illustrative and non-limiting manner, in which:
Fig. 1 is a sequence diagram illustrating how the settings before the wireless connection are established between user and networking device.
Fig. 2 is a sequence diagram illustrating how the random string is generated and send to the user device.
Fig. 3 schematically shows the process of periodic generation of TOTPs. This process takes place in parallel and asynchronously to the connection/communication processes in both the computing and networking devices.
Fig. 4 is a sequence diagram illustrating the wireless connection process performed by the user computing device.
Fig. 5 is a flow chart illustrating two different embodiments performed by the networking device upon receiving the data packet with the encrypted text.

### Detailed Description of the Invention

Present invention provides a method, and a corresponding system, for encrypting wireless communications including authentication. It is assumed that the networking device 20, such as router, used for providing the wireless connection has capabilities (or means or a unit) for receiving biometric input, such as fingerprint, face recognition or some other. The computing device 10 of the user 1, such as a Smartphone device or a Tablet, among others, should be also able to receive that biometric input. Additionally, it is assumed that the networking device 20 has capabilities to do some processing and storing. These capabilities could also be implemented in a separate server and authentication server if it would be necessary or adequate.

Present invention addresses several problems at the same time. Firstly, authentication of a user in a wireless network. This is provided by using biometry and is intrinsic to the solution. Besides authenticating the user, the proposed solution provides encryption and periodic authentication. The proposed method ciphers the communication with the access point and generates an encryption key that only allows the valid user to communicate in the wireless network. The communication is protected by periodically changing the key that ciphers the information transmitted. Furthermore, since the biometric proof is requested periodically, it is possible to ensure that the user's computing device 10 is the one that logged in and not a different one. Therefore, the security of the proposal relies on three elements: a random factor, a temporal one and a biometric one. Only the person on possession of these three correct elements at the same time can connect to the wireless network.

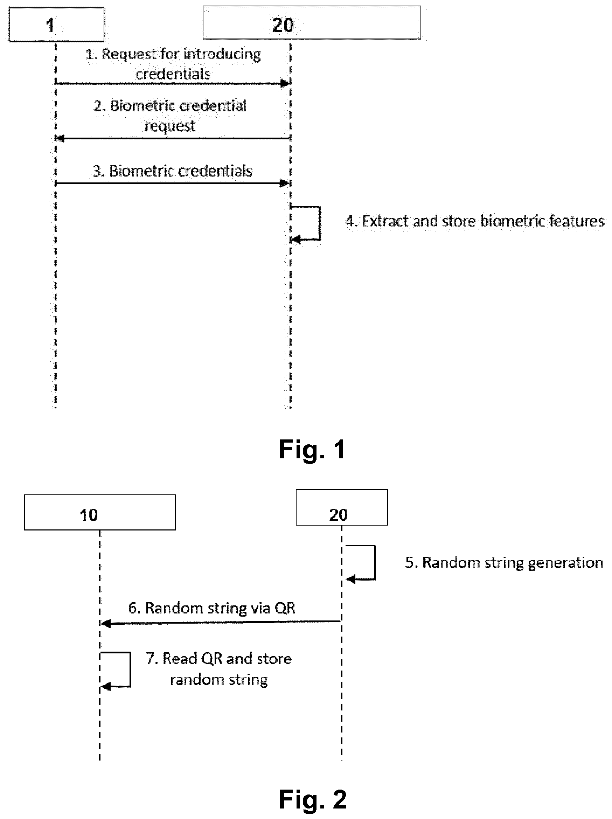

Present invention works as follows. In a first stage, see Fig. 1, the settings for the wireless communication are stablished. For that, the user 1 who wants to use the wireless network introduces her/his biometric credential information in the networking device 20. For that, it is necessary that the user 1 is physically in the place where the networking device 20 is located. Biometric credential information can be gathered by different biometric mechanisms, such as fingerprint, face recognition or any other biometric mechanism. This process (establishment of the settings) takes place only once, before the first time the user 1 wants to access the wireless network. The biometric credential information is processed and biometric features that characterize the user 1 are extracted. The biometric features (or possibly a hash thereof) are stored in a register of the networking device 20.

After that, the networking device 20 generates, see Fig. 2, a random string that is sent to the computing device 10 preferably via a QR code. The computing device 10 reads the QR and stores the random string locally. Although QR is the preferable implementation, there could be other mechanisms for implementing the transmission of this information, such as an SMS with a universal link that includes the TOTP in the application that controls it.

When the user 1 wants to connect to the wireless network, the computing device 10 sends a request for connection to the networking device 20. The networking device 20 replies launching an authentication challenge, asking for the biometric credential information. The user 1 introduces the biometric credential information in the computing device 10 (fingerprint, face recognition or other). After extracting the biometric features of those credentials, the values of those features are stored. Then, a secret parameter of the temporary passcode is calculated (i.e. a fixed part of the temporary passcode, also termed TOTP). Preferably, this is calculated by performing a first cryptographic function such as a hash function over the extracted biometric features and the random string, i.e., biometric features concatenated with random string.

Following the RFC of TOTP, the final temporary passcode is calculated by performing a second cryptographic function over said secret parameter and a time parameter. A possible implementation for the second cryptographic function is using SHA512 and taking half of the digits (256 bits). Note that in present invention, the temporary passcode value proposed in this solution contains 256 bits and it contains alphanumeric characters. Other possible implementations would be using SHA-256 or SHA-3 of 256 bits.

Therefore, two cryptographic functions are applied for the calculation of the temporary passcode value: firstly, for calculating the secret parameter with biometry and a random string. Secondly for calculating the temporary passcode value for a certain moment as it is defined in the RFC, that is, applying a HMAC function that combines the secret parameter and current time parameter (of the computing device 10 and of the networking device 20).

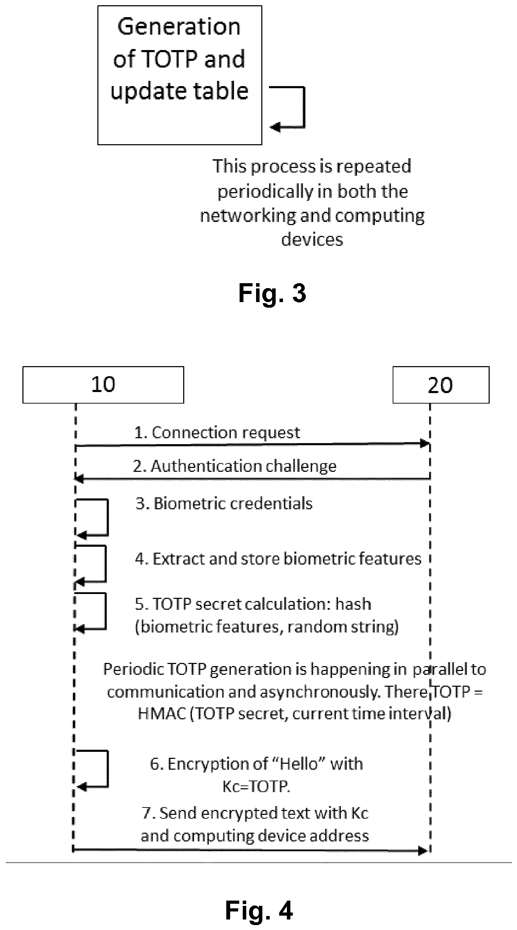

Since the temporary passcode is periodically generated by both the computing device 10 and of the networking device 20, the amount of time that an encryption key is valid is limited. Then, the key ciphering the communication changes periodically, what provides security and robustness in case the key is compromised. The TOTP generation process happens in parallel and asynchronously to the connection or communication processes. Fig. 3 represents the process of temporary passcodes generation in both the networking device 20 and the computing device 10.

The networking device 20 has a register, or table, where a tuple for each computing device is stored. The tuple contains four elements: The biometric features identifying the user, the random string generated, the last temporary passcode generated (Kc), the device address (preferably the MAC address) of the user's computing device 10.

Going back to the connection process, the computing device 10 encrypts by using Kc as key a special data packet containing a given text, such as the word "Hello". The value of Kc corresponds to the last temporary passcode generated (which varies periodically and depends on the biometric features of the user 1, a temporal factor and a random string). The computing device 10 sends the text encrypted with Kc to the networking device 20 and the device address of the computing device 10. These steps are represented in Fig 4.

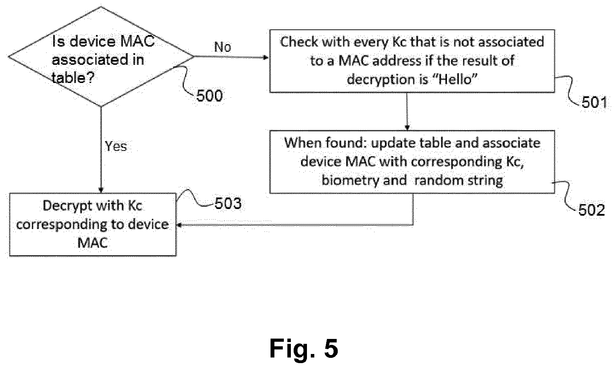

When the networking device 20 receives the encrypted text, it checks (see Fig. 5) whether the device address of the computing device 10 is already registered in the register (step 500), i.e. if that device address is associated to an encryption key Kc, random string and biometric features. The first time a computing device 10 connects it is not registered, then the networking device 20 tries to decrypt the text with all encryption keys Kc in the register that are not associated to a device address yet. If the user 1 introduced biometric credential information in the first step (settings) and the random string in the device and temporal factor are correct, there is an encryption key Kc stored in the register that can decrypt the text and obtain as result the given text "Hello" (step 501). In fact, the networking device 20 can distinguish the correct key because in that case decryption corresponds to the given text "Hello". When the encryption key Kc is found, it is associated with the device address of the computing device 10 in the networking device register (step 502). Now the networking device 20 can decrypt with the encryption key Kc (step 503).

This process of searching for the proper encryption key Kc is only done the first time a computing device 10 connects and it is stored for following occasions. Contrarily, if the device address was already registered in the register, the networking device 20 directly uses the encryption key Kc stored in the register to decrypt the received data packet (step 503).

After those steps, the wireless communication is established and it is encrypted with the encryption key Kc (that takes the value of the current temporary passcode). Since the encryption key Kc depends on biometric features of the user 1, only this person is able to establish wireless communication. Furthermore, the communication can only be stablished if also the random and temporal factors are correct. This prevents cases of robbery of computing devices or other users trying to use the connection of the legitimate user 1. A preferred and recommended option for implementing the encryption algorithm is using the current standard (AES). However, other algorithms could be included, for instance the IDEA algorithm, among others.

Every time the temporary passcode changes, a data packet with the given text is sent to the networking device 20, besides packets corresponding to data of the communication, so that the networking device 20 can check if the text obtained in decryption matches this text, and then the three factors in the temporary passcode (biometry, random string, temporal factor) are checked to be correct. If any of these factors are not correct, the networking device 20 stops the wireless connection.

Apart from that, present invention also includes periodic authentication. This is done by repeating the process illustrated on Fig. 4, except the connection request (step 1). It means that after a certain amount of time the computing device 10 asks for introducing biometric credential information again. This time interval could be configurable by the networking device 20, depending on the user 1 habits for example, or by the user 1. In the process of the TOTP calculation, the TOTP secret and TOTP value are calculated with the new biometry introduced by the user 1. The TOTP is used as key to cipher the given text and send it to the networking device 20. When the networking device 20 receives it, it decrypts the text with the key associated to such device address (Fig. 5). If decryption gets the given text, biometry was correct and connection continues without interruption. Otherwise it is assumed that the user 1 is different and then not authorized. In this case the wireless communication is interrupted.

Present invention provides authentication of the user 1 in the wireless network. Furthermore, it guarantees that the user 1 of the computing device 10 is the one that logged in the long the session lasts. Authentication credentials identify uniquely the user 1 since biometric credential information is used.

Moreover, besides authentication, present invention solution offers ciphering the communication with a key that includes biometric features of the user 1, a random factor and a temporal factor. This implies that only the authenticated user can, besides authenticate in the wireless network, establish communication with the wireless network and make possible exchanging data packets corresponding to the wireless communication. This new approach establishes a new security approach for connecting to a wireless network that can be seen as an alternative to other wireless security protocols such as WEP, WPA or WP2.

While the foregoing is directed to embodiments of the present invention, other and further embodiments of the invention may be devised without departing from the basic scope thereof. For example, other aspects may be implemented in hardware or software or in a combination of hardware and software.

Additionally, the software programs included as part of the invention may be embodied in a computer program product that includes a computer useable medium. For example, such a computer usable medium can include a readable memory device, such as a hard drive device, a flash memory device, a CD-ROM, a DVD/ROM, or a computer diskette, having computer readable program code segments stored thereon. The computer readable medium can also include a communications link, either optical, wired, or wireless, having program code segments carried thereon as digital or analog signals.

The scope of the present invention is determined by the claims that follow.

## Claims

1. A method for encrypting wireless communications including authentication, comprising:
a) setting configuration parameters for a wireless connection to a communications network to be established by a computing device (10) of a user (1) and a networking device (20), by the latter (20):
receiving biometric credential information from the user (1),
processing the received biometric credential information, and
generating and further sending a random string to said computing device (10), wherein biometric features extracted from said biometric credential information during said processing and the random string being stored in a register of the networking device (20);
b) receiving, by the networking device (20), a request for the wireless connection to said communications network from the computing device (10);
c) receiving, by the computing device (10), the biometric credential information from the user (1);
d) generating, by the computing device (10) and by the networking device (20), a temporary passcode,
wherein the computing device (10) generating the temporary passcode by performing a first cryptographic function over the received random string and biometric features extracted from said received biometric credential information providing a secret parameter, and by performing a second cryptographic function over said provided secret parameter and a time parameter, wherein said time parameter contains the number of time steps from an initial counter and current time of the computing device (10),
wherein the networking device (20) generating the temporary passcode by performing the first cryptographic function over the stored random string and biometric features extracted from the stored biometric credential information providing a secret parameter, and by performing the second cryptographic function over said provided secret parameter and a time parameter, wherein said time parameter contains the number of time steps from an initial counter and current time of the networking device (20), and wherein the networking device (20) stores its generated temporary passcode in said register;
e) sending, by the computing device (10), to the networking device (20), a device address of the computing device (10) and an encrypted data packet containing a given text, said data packet being encrypted with an encryption key corresponding to the temporary passcode generated by the computing device (10);
f) checking, by the networking device (20), whether the received device address of the computing device (10) is already stored in said register, wherein:
if said device address is not stored in the register, the networking device (20) checks every encryption key not associated to a device address until finding the one that decrypts and gets the given text, and updates said register associating the device address to the computing device (10), or
if said device address is stored in the register, the networking device (20) uses the encryption key associated to the device address to decrypt the received data packet; and
g) establishing the wireless connection between the computing device (10) and the networking device (20), said wireless connection being encrypted with the encryption key,
wherein the user (1) being authenticated every certain configurable period of time by the computing device (10) requesting the user (1) to reintroduce the biometric credential information, wherein if the reintroduced biometric credential information do not match the biometric credential information received in step a), the networking device (20) stops the wireless connection, and
wherein the temporary passcodes in said step d) being periodically generated in a parallel and asynchronous process to the wireless connection, the temporary passcodes being generated by using the last biometric credential information introduced by the user (1) on the computing device (10), so every time the temporary passcode changes, a data packet with the given text is sent to the networking device (20), besides other packets corresponding to data of the communication, so that the networking device (20) can check if the text obtained in decryption matches this text, and then the three factors, biometric features, random string, time parameter, in the temporary passcode are checked to be correct, the networking device (20) stopping the wireless connection if any of these factors are not correct.

2. The method of claim 1, wherein the biometric credential information comprises at least one of a fingerprint, face recognition or voice recognition.

3. The method of claim 1, wherein the first cryptographic function comprises a hash function and the second cryptographic function comprises a keyed-hash message authentication code, HMAC.

4. The method of claim 3, wherein a crypto parameter of the second cryptographic function is settled to Secure Hash Algorithm of 512 bits in which only half of said bits are taken and Advanced Encryption Standard, AES, is used as encryption algorithm for the encryption key.

5. The method of claim 1, wherein said certain configurable period of time being set by the networking device (20) or by the user via the computing device (10).

6. The method of claim 1, wherein the random string being send to the computing device (10) via a quick response, QR, code.

7. A system for encrypting wireless communications including authentication, comprising:
a computing device (10) including one or more processors, a memory and at least one biometric unit configured to receive biometric credential information from a user (1); and
a networking device (20) configured to provide wireless connection to a communications network to said computing device (10), the networking device (10) including one or more processors, a memory and at least one biometric unit configured to receive biometric credential information from the user (1),
wherein the computing device (10) and the networking device (20) being configured to implement the method of any one of claims 1 to 6.

8. The system of claim 7, wherein the computing device (10) at least comprises a mobile smartphone device, a tablet, a computer, or a notebook.

9. The system of claim 7, wherein the networking device (20) comprises a router.

## Patentansprüche

1. Verfahren zur Verschlüsselung drahtloser Kommunikation mit Authentifizierung, umfassend:
a) Einstellen von Konfigurationsparametern für eine drahtlose Verbindung zu einem Kommunikationsnetz, die von einer Rechnervorrichtung (10) eines Benutzers (1) und einer Netzwerkvorrichtung (20) aufgebaut werden soll; dabei umfasst letztere (20):
Empfangen biometrischer Berechtigungsinformationen von dem Benutzer (1), Verarbeiten der empfangenen biometrischen Berechtigungsinformationen sowie Generieren und Weiterleiten einer Zufallszeichenfolge an die genannte Rechnervorrichtung (10), wobei biometrische Merkmale, die während der genannten Verarbeitung aus den genannten biometrischen Berechtigungsinformationen ermittelt werden, und die Zufallszeichenfolge in einem Register der Netzwerkvorrichtung (20) gespeichert werden;
b) Empfangen einer Aufforderung von der Rechnervorrichtung (10) durch die Netzwerkvorrichtung (20) zur drahtlosen Verbindung mit dem genannten Kommunikationsnetz;
c) Empfangen der biometrischen Berechtigungsinformationen vom Benutzer (1) durch die Rechnervorrichtung (10);
d) Generieren eines temporären Kenncodes durch die Rechnervorrichtung (10) und durch die Netzwerkvorrichtung (20),
wobei die Rechnervorrichtung (10) den temporären Kenncode generiert, indem sie eine erste kryptographische Funktion an der empfangenen Zufallszeichenfolge und den aus den genannten empfangenen biometrischen Berechtigungsinformationen ermittelten biometrischen Merkmalen ausführt, woraus sich ein geheimer Parameter ergibt, und indem sie eine zweite kryptographische Funktion an dem genannten bereitgestellten geheimen Parameter und einem Zeitparameter ausführt, wobei der genannte Zeitparameter die Anzahl von Zeitschritten ab einem Anfangszählstand und der aktuellen Zeit der Rechenvorrichtung (10) enthält,
wobei die Netzwerkvorrichtung (20) den temporären Kenncode generiert, indem sie die erste kryptographische Funktion an der gespeicherten Zufallszeichenfolge und den aus den gespeicherten biometrischen Berechtigungsinformationen ermittelten biometrischen Merkmalen ausführt, woraus sich ein geheimer Parameter ergibt, und indem sie die zweite kryptographische Funktion an dem genannten bereitgestellten geheimen Parameter und einem Zeitparameter ausführt, wobei der genannte Zeitparameter die Anzahl von Zeitschritten ab einem Anfangszählstand und der aktuellen Zeit der Netzwerkvorrichtung (20) enthält; und wobei die Netzwerkvorrichtung (20) ihren generierten temporären Kenncode in dem genannten Register speichert;
e) Senden einer Geräteadresse der Rechnervorrichtung (10) und eines verschlüsselten Datenpakets, das einen gegebenen Text enthält, durch die Rechnervorrichtung (10) an die Netzwerkvorrichtung (20), wobei das genannte Datenpaket mit einem Verschlüsselungsschlüssel verschlüsselt wird, der dem von der Rechnervorrichtung(10) generierten temporären Kenncode entspricht;
f) Überprüfen, durch die Netzwerkvorrichtung (20), ob die von der Rechnervorrichtung (10) eingegangene Geräteadresse bereits in dem genannten Register gespeichert ist, wobei gilt:
wenn die genannte Geräteadresse nicht in dem Register gespeichert ist, prüft die Netzwerkvorrichtung (20) jeden nicht einer Geräteadresse zugeordneten Verschlüsselungsschlüssel, bis sie denjenigen findet, der den gegebenen Text entschlüsselt und erhält, und aktualisiert das genannte Register unter Zuordnung der Geräteadresse zu der Rechenvorrichtung (10), oder
wenn die genannte Geräteadresse in dem Register gespeichert ist, verwendet die Netzwerkvorrichtung (20) den der Geräteadresse zugeordneten Verschlüsselungsschlüssel zum Entschlüsseln des empfangenen Datenpakets; und
g) Aufbau der drahtlosen Verbindung zwischen der Rechnervorrichtung (10) und der Netzwerkvorrichtung (20), wobei die genannte drahtlose Verbindung mit dem Verschlüsselungsschlüssel verschlüsselt wird,
wobei der Benutzer (1) in einer bestimmten konfigurierbaren Zeitspanne durch die Rechnervorrichtung (10) authentifiziert wird, indem der Benutzer (1) aufgefordert wird, die biometrischen Berechtigungsinformationen erneut einzugeben, wobei die Netzwerkvorrichtung (20), wenn die erneut eingegebenen biometrischen Berechtigungsinformationen nicht mit den in Schritt a) empfangenen biometrischen Berechtigungsinformationen übereinstimmen, die drahtlose Verbindung abbricht, und
wobei die temporären Kenncodes in dem genannten Schritt d) periodisch in einem zu der drahtlosen Verbindung parallelen und asynchronen Prozess generiert werden, wobei die temporären Kenncodes unter Verwendung der letzten vom Benutzer (1) in die Rechnervorrichtung (10) eingegebenen biometrischen Berechtigungsinformationen generiert werden, so dass jedes Mal, wenn sich der temporäre Kenncode ändert, ein Datenpaket mit dem gegebenen Text neben anderen den Kommunikationsdaten entsprechenden Paketen an die Netzwerkvorrichtung (20) geschickt wird, so dass die Netzwerkvorrichtung (20) überprüfen kann, ob der bei der Entschlüsselung erhaltene Text mit diesem Text übereinstimmt, und dann die drei Faktoren biometrische Merkmale, Zufallszeichenfolge und Zeitparameter im temporären Kenncode auf ihre Richtigkeit überprüft werden, wobei die Netzwerkvorrichtung (20) die drahtlose Verbindung unterbricht, wenn einer dieser Faktoren nicht stimmt.

2. Verfahren nach Anspruch 1, bei dem die biometrischen Berechtigungsinformationen mindestens einen Fingerabdruck, eine Gesichts- oder eine Spracherkennung umfassen.

3. Verfahren nach Anspruch 1, bei dem die erste kryptografische Funktion eine Hash-Funktion umfasst und die zweite kryptografische Funktion einen Keyed-Hash Message Authentication Code (HMAC) umfasst.

4. Verfahren nach Anspruch 3, bei dem ein Kryptoparameter der zweiten kryptographischen Funktion auf einen Secure Hash Algorithm von 512 Bit, bei dem nur die Hälfte der genannten Bit belegt ist, festgelegt wird, und der Advanced Encryption Standard (AES) als Verschlüsselungsalgorithmus für den Verschlüsselungsschlüssel verwendet wird.

5. Verfahren nach Anspruch 1, bei dem die genannte bestimmte konfigurierbare Zeitspanne durch die Netzvorrichtung (20) oder durch den Benutzer über die Rechnervorrichtung (10) eingestellt wird.

6. Verfahren nach Anspruch 1, bei dem die Zufallszeichenfolge über einen Quick Response (QR) Code an die Rechenvorrichtung (10) geschickt wird.

7. System zur Verschlüsselung drahtloser Kommunikation mit Authentifizierung, umfassend:
eine Rechnervorrichtung (10) mit einem oder mehreren Prozessoren, einem Speicher und mindestens einer biometrischen Einheit, die zum Empfang biometrischer Berechtigungsinformationen von einem Benutzer (1) konfiguriert ist; und
eine Netzwerkvorrichtung (20), die zur Bereitstellung einer drahtlosen Verbindung zu einem Kommunikationsnetz mit der genannten Computervorrichtung (10) ausgelegt ist, wobei die Netzwerkvorrichtung (10) einen oder mehrere Prozessoren, einen Speicher und mindestens eine zum Empfang biometrischer Berechtigungsinformationen vom Benutzer (1) ausgelegte biometrische Einheit umfasst,
wobei die Rechnervorrichtung (10) und die Netzwerkvorrichtung (20) zur Umsetzung des Verfahrens nach einem der Ansprüche 1 bis 6 ausgelegt sind.

8. System nach Anspruch 7, wobei die Rechnervorrichtung (10) mindestens ein mobiles Smartphone-Gerät, ein Tablet, einen Computer oder ein Notebook umfasst.

9. System nach Anspruch 7, wobei die Netzwerkvorrichtung (20) einen Router umfasst.

## Revendications

1. Procédé de cryptage des communications sans fil comprenant l'authentification, comprenant :
a) la définition de paramètres de configuration pour une connexion sans fil à un réseau de communications devant être établie par un dispositif informatique (10) d'un utilisateur (1) et un dispositif de réseau (20), par ce dernier (20) :
la réception des informations d'identification biométriques de l'utilisateur (1), le traitement des informations d'identification biométriques reçues, et la génération et en outre l'envoi d'une chaîne aléatoire audit dispositif informatique (10), dans lequel des caractéristiques biométriques extraites desdites informations d'identification biométriques pendant ledit traitement et la chaîne aléatoire sont stockées dans un registre du dispositif de réseau (20) ;
b) la réception, par le dispositif de réseau (20), d'une demande de connexion sans fil audit réseau de communications de la part du dispositif informatique (10) ;
c) la réception, par le dispositif informatique (10), des informations d'identification biométriques de l'utilisateur (1) ;
d) la génération, par le dispositif informatique (10) et par le dispositif de réseau (20), d'un code d'accès temporaire,
dans lequel le dispositif informatique (10) génère le code d'accès temporaire en exécutant une première fonction cryptographique sur la chaîne aléatoire reçue et les caractéristiques biométriques extraites desdites informations d'identification biométriques reçues fournissant un paramètre secret, et en exécutant une deuxième fonction cryptographique sur ledit paramètre secret fourni et un paramètre de temps, dans lequel ledit paramètre de temps contient le nombre de pas de temps à partir d'un compteur initial et l'heure actuelle du dispositif informatique (10),
dans lequel le dispositif de réseau (20) génère le code d'accès temporaire en exécutant la première fonction cryptographique sur la chaîne aléatoire stockée et les caractéristiques biométriques extraites des informations d'identification biométriques stockées fournissant un paramètre secret, et en exécutant la deuxième fonction cryptographique sur ledit paramètre secret fourni et un paramètre de temps, dans lequel ledit paramètre de temps contient le nombre de pas de temps à partir d'un compteur initial et l'heure actuelle du dispositif de réseau (20), et dans lequel le dispositif de réseau (20) stocke son code d'accès temporaire généré dans ledit registre ;
e) l'envoi, par le dispositif informatique (10), au dispositif de réseau (20), d'une adresse de dispositif du dispositif informatique (10) et d'un paquet de données cryptées contenant un texte donné, ledit paquet de données étant crypté avec une clé de cryptage correspondant au code d'accès temporaire généré par le dispositif informatique (10) ;
f) la vérification, par le dispositif de réseau (20), de si l'adresse de dispositif reçue du dispositif informatique (10) est déjà stockée dans ledit registre, dans lequel :
si ladite adresse de dispositif n'est pas stockée dans le registre, le dispositif de réseau (20) vérifie chaque clé de cryptage non associée à une adresse de dispositif jusqu'à ce qu'il trouve celle qui décrypte et obtient le texte donné, et met à jour ledit registre en associant l'adresse de dispositif au dispositif informatique (10), ou
si ladite adresse de dispositif est stockée dans le registre, le dispositif de réseau (20) utilise la clé de cryptage associée à l'adresse de dispositif pour décrypter le paquet de données reçu ; et
g) établir la connexion sans fil entre le dispositif informatique (10) et le dispositif de réseau (20), ladite connexion sans fil étant cryptée avec la clé de cryptage,
dans lequel l'utilisateur (1) est authentifié à chaque certaine période de temps configurable par le dispositif informatique (10) demandant à l'utilisateur (1) de réintroduire les informations d'identification biométriques, dans lequel si les informations d'identification biométriques réintroduites ne correspondent pas aux informations d'identification biométriques reçues à l'étape a), le dispositif de réseau (20) arrête la connexion sans fil, et
dans lequel les codes d'accès temporaires de ladite étape d) sont générés périodiquement dans un processus parallèle et asynchrone à la connexion sans fil, les codes d'accès temporaires étant générés en utilisant les dernières informations d'identification biométriques introduites par l'utilisateur (1) sur le dispositif informatique (10), de sorte que chaque fois que le code d'accès temporaire change, un paquet de données avec le texte donné est envoyé au dispositif de réseau (20), en plus des autres paquets correspondant aux données de la communication, afin que le dispositif de réseau (20) puisse vérifier si le texte obtenu lors du décryptage correspond à ce texte, puis les trois facteurs, caractéristiques biométriques, chaîne aléatoire, paramètre de temps, dans le code d'accès temporaire sont vérifiés pour être corrects, le dispositif de réseau (20) arrêtant la connexion sans fil si l'un de ces facteurs n'est pas correct.

2. Procédé selon la revendication 1, dans lequel les informations d'identification biométriques comprennent au moins l'un d'une empreinte digitale, une reconnaissance faciale ou une reconnaissance vocale.

3. Procédé selon la revendication 1, dans lequel la première fonction cryptographique comprend une fonction de hachage et la deuxième fonction cryptographique comprend un code d'authentification de message de hachage avec clé, HMAC.

4. Procédé selon la revendication 3, dans lequel un paramètre cryptographique de la deuxième fonction cryptographique est réglé sur un algorithme de hachage sécurisé de 512 bits dans lequel seule la moitié desdits bits sont pris et la norme de cryptage avancée, AES, est utilisée comme algorithme de cryptage pour la clé de cryptage.

5. Procédé selon la revendication 1, dans lequel ladite certaine période de temps configurable est fixée par le dispositif de réseau (20) ou par l'utilisateur via le dispositif informatique (10).

6. Procédé selon la revendication 1, dans lequel la chaîne aléatoire est envoyée au dispositif informatique (10) via un code de réponse rapide, QR.

7. Système de cryptage des communications sans fil comprenant l'authentification, comprenant :
un dispositif informatique (10) comprenant un ou plusieurs processeurs, une mémoire et au moins une unité biométrique configurée pour recevoir des informations d'identification biométriques d'un utilisateur (1) ; et
un dispositif de réseau (20) configuré pour fournir une connexion sans fil à un réseau de communication audit dispositif informatique (10), le dispositif de réseau (10) comprenant un ou plusieurs processeurs, une mémoire et au moins une unité biométrique configurée pour recevoir des informations d'identification biométriques de l'utilisateur (1),
dans lequel le dispositif informatique (10) et le dispositif de réseau (20) sont configurés pour mettre en œuvre le procédé selon l'une quelconque des revendications 1 à 6.

8. Système selon la revendication 7, dans lequel le dispositif informatique (10) comprend au moins un dispositif mobile de type smartphone, une tablette, un ordinateur ou un ordinateur portable.

9. Système selon la revendication 7, dans lequel le dispositif de réseau (20) comprend un routeur.
